# EUROPEAN PATENT APPLICATION

(11) **EP 0 841 832 A2**
(43) Date of publication of application: **13.05.1998**
(21) Application number: 97308622.6
(22) Date of filing: 29.10.1997
(51) Int. Cl.: H04Q 11/04

(54) **Promiscuous network monitoring utilizing multicasting within a switch**

(30) Priority: 08.11.1996 US 746364
(71) Applicant: AT&T Corp., New York, NY 10013-2412 (US)
(72) Inventor: Ramakrishnan, Kadangode K., Berkeley Heights, New Jersey 07922 (US)
(74) Representative: Harding, Richard Patrick

(57) **Abstract**

Multicasting within a switch is utilized to promiscuously monitor switched communication networks. The switch routes data packets from input ports to data output ports and routes copies of the data packets to a monitor output port. A monitor processor is connected to the switch to receive copies of all data packets received at the switch, and thereby monitor the communication network.

## Description

### FIELD OF THE INVENTION

The present invention relates to promiscuous monitoring of communication networks. Specifically, this invention relates to a method and apparatus for providing promiscuous monitoring of a communication network through the use of multicasting within an ATM switch.

### BACKGROUND

A communication network needs to be monitored to evaluate its performance and to diagnosis any potential problems. Typically, an end-station communication device(s) is connected to the network in such a manner that the end-station(s) receive all the data transmitted within the network: this is known as promiscuous monitoring. The configurations by which promiscuous monitoring can be performed will vary depending upon the type of network.

Multi-access networks, such as an FDDI (fiber distributed data interface) and Ethernet local-area network (LAN), allow multiple points of access. In these multi-access networks, a monitoring point can be easily established through which all of the network communication traffic passes. In such a case, an end-station can be connected to the network to easily perform promiscuous monitoring of the network. By disabling the end-station's filtering functions, it can receive and promiscuously monitor all communication traffic transmitted over the network.

With asynchronous transfer mode (ATM) and other switched networks, however, such as switched Fast Ethernet or switched FDDI, promiscuous monitoring cannot be as easily performed because the links are point to point. Thus, in such networks, no one place exists within the network where a promiscuous monitor can be located to receive all the data packets/frames. A typical prior art approach is to promiscuously monitor each link going out of a switch output port by inserting a T-connector, such as an optical splitter, into the link.

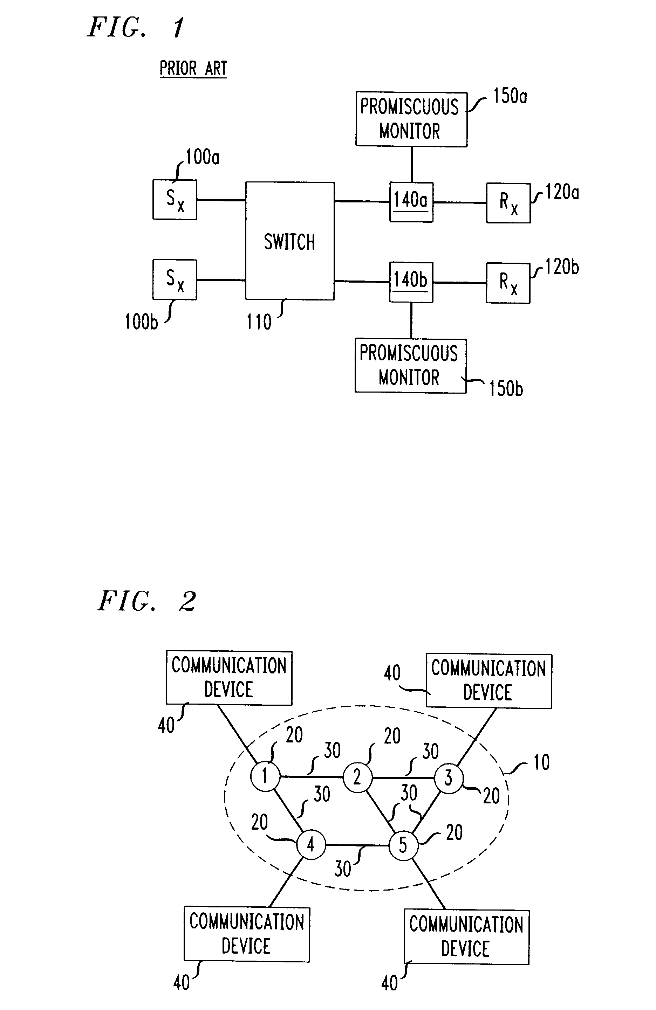

Fig. 1 illustrates a prior art approach for promiscuous monitoring of a communication network. Sender communication devices 100a and 100b are connected to switch 110 which is connected to receiver communication devices 120a and 120b on links 130a and 130b, respectively. The communication network shown in Fig. 1 is simplified for illustrative purposes; thus, a typical communication network has a vast number of nodes with switches, sender and receiver communication devices, and links interconnecting the switches. Unlike the simple case shown in Fig. 1 having a single switch 110, communication data sent by a sender communication device will typically pass through multiple switches 110 before reaching a receiver communication device.

Using T-connector 140a and 140b, a copy of the packets transmitted on links 130a and 130b, respectively, will be received by not only the intended receiver, 120a and 120b, respectively, but also can be received by an end-station performing promiscuous monitoring. Within a communication network, the point of access for promiscuous monitoring is usually selected at the switch through which most of the communication traffic passes. Promiscuous monitors 150a and 150b are connected to each T-connector 140a and 140b, respectively, thereby monitoring links 130a and 130b, respectively. Alternatively, a single promiscuous monitor can be connected to multiple T-connectors through multiple input ports in the promiscuous monitor thereby monitoring several individual links at the same monitor.

The prior art configurations present several shortcomings. As the number of switch output ports increases, the necessary number of T-connectors increases, and correspondingly the required number of monitoring end-stations or input ports at the monitoring end-station also increases. Of course, with such a monitoring configuration, monitoring costs will increase as the number of switch output ports increase. Additionally, such hardware-based monitoring techniques lack the flexibility to change as the network characteristics change. For example, although the amount of traffic over certain links may change over time, the configuration of the monitoring systems can be modified only inconveniently by changing the hardware connections or by having a large number of T-connectors and selectively enabling the reception of the ports in the promiscuous monitor.

### SUMMARY OF THE INVENTION

The present invention utilizes multicasting within a switch to promiscuously monitor a switched communication network at a single point in the network. At least one port per switch is established as a monitor port, where the switch has sufficient capacity to allow the port to be used for monitoring. The switch comprises input ports, data output ports, and monitor output ports. An interconnection network within the switch is connected to the input ports, the data output ports, and the monitor output port. The interconnection network routes data packets from input ports to data output ports and routes copies of the data packets to the monitor output port. A monitor processor is connected to the switch at the monitor output port to receive copies of data packets received at the switch, and thereby monitor the communication network. The promiscuous monitor can receive copies of all data packets received at the switch or receive copies of just a selective set of data packets received at the switch.

In another embodiment of the present invention, the switch routes copies of the data packets from some of the input ports or output ports to one monitor output port and routes copies of the data packets arriving at the remaining input ports or output ports, respectively, to another monitor output port. The present invention can also allow modification of which input ports' or output ports' data packet copies are routed to which monitor output ports. Of course, the present invention can be configured with more than two monitor output ports.

### BRIEF DESCRIPTION OF THE DRAWINGS

Fig. 1 illustrates a prior art approach for promiscuous monitoring of a communication network.

Fig. 2 shows a wide area network illustrative of the configuration and operation of a contemporary communications network.

Fig. 3 illustrates a switch and promiscuous monitor according to an embodiment of the present invention.

Fig. 4 illustrates a multicasting routing methodology to perform promiscuous monitoring within the switch shown in Fig. 3.

Figs. 5A and 5B shows a switch with multiple monitor output ports according to a second embodiment of the present invention.

Fig. 6 shows a switch with multiple monitor output ports and output port-based monitoring according to a third embodiment of the present invention.

### DETAILED DESCRIPTION

Networks are a principal means of exchanging or transferring information (e.g., data, voice, text, video, etc.) among communications devices (i.e., devices for inputting and/or outputting information such as computer terminals, multimedia workstations, fax machines, printers, servers, telephones, videophones, etc.) connected to the network(s). A network typically comprises switching nodes connected to each other, and to communication devices, by links.

Fig. 2 shows a wide area network illustrative of the configuration and operation of a contemporary communications network. Network 10 comprises a plurality of switching nodes 20 and links 30. Each of the switching nodes 20 may also have associated therewith a buffer of predetermined size and each of the links 30 will have associated therewith a predetermined traffic handling capacity. Note that the depiction of a network comprising only five switching nodes is for convenience of illustration, and that an operating network may have a much larger number of switching nodes and associated connecting links.

Various switching nodes are shown illustratively connected to communications devices 40. It should be understood that the single communications devices shown connected to the switching nodes in the figure are used for simplicity of illustration, and that an actual implementation of such a network would ordinarily have a number of communications devices connected at such switching nodes. Note, as well, that the illustrated communications devices may also represent another network, such as a LAN, which is connected to network 10.

Each communications device 40 generates information for use by, or receives information from, other communications devices in the network. The term "information" as used herein is intended to include data, text, voice, video, etc. Information from communications device 40 is characterized by a set of transmission and/or rate parameters related to network link and buffer requirements needed to accommodate transmission of such information. Control information can be communicated from communication device 40 to a switch at switching node 20 to specify the rate/buffer requirements.

Communications networks will often use a networking protocol called Asynchronous Transfer Mode (ATM). In these networks, all communication at the ATM layer is in terms of fixed-size information segments, called "cells" in ATM terminology. An ATM cell consists of 48 bytes of payload and 5 bytes for the ATM-layer header. Routing of cells is accomplished through cell switches. Packets of information may be broken up (or segmented) into multiple cells, each cell carrying the 48 bytes of information sequentially. The destination reassembles the cells received into the original packet.

ATM cells can be carried on a virtual circuit (VC) that must be set up such that received cells can be routed to multiple ports at a switch. Permanent VC connections can be easily set up through switch management; switched VC connections, however, need to be set up on a more dynamic basis.

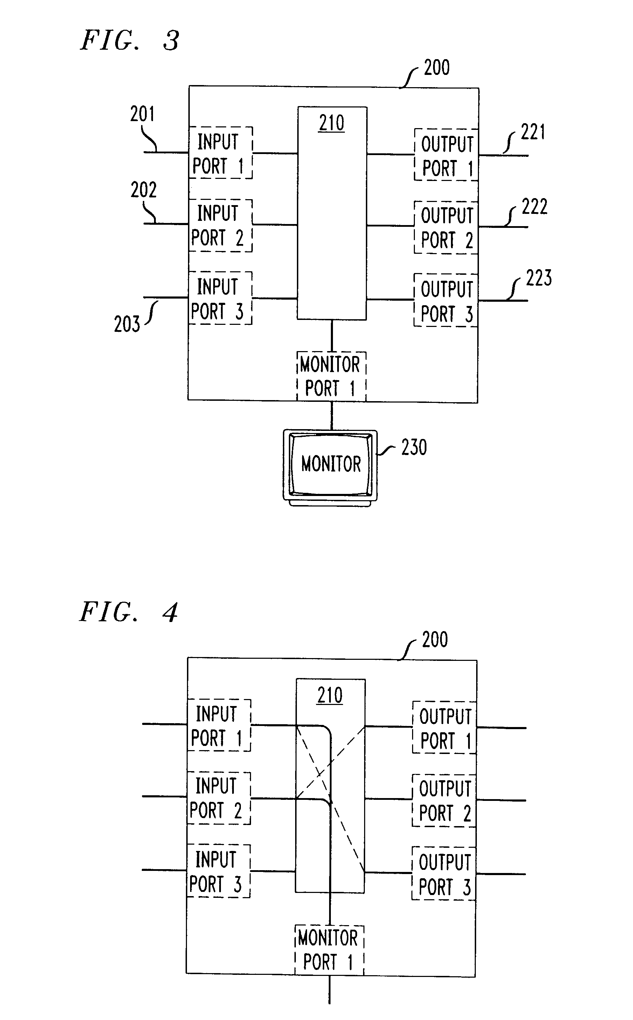

Fig. 3 illustrates a switch and promiscuous monitor according to an embodiment of the present invention. As shown in Fig. 3, switch 200 has three input ports, three data output ports, and a monitor output port. Although switch 200 shown in Fig. 3 has a certain number of ports for illustrative purposes, the present invention is equally applicable for any switch having any number of ports.

Input links 201, 202 and 203 are connected to switch 200 at input ports 1, 2 and 3, respectively, which are connected to interconnection network 210. Interconnection network 210 is connected to data output ports 1, 2 and 3. Output links 221, 222 and 223 are connected to data output ports 1, 2 and 3, respectively. Interconnection network 210 is also connected to monitor port 1 which is connected to promiscuous monitor processor 230.

Interconnection network 210 routes data packets received at an input port to the appropriate destination data output port(s). The number of input ports and/or output ports for switch 200 can exceed the number of links of the network connected to switch 200. Additional output ports therefore are available for connecting one or more promiscuous monitors. In addition to switching communication data packets between the input ports and the data output ports, interconnection network 210 also routes a copy of data packets received at each input port or output port to the monitor output port 1 through the use of known point-to-multipoint multicasting techniques within a single switch. Point-to-multipoint multicasting is the routing of a single message to multiple recipients. Typically, multicasting is utilized to allow a single sender to transmit a message, through the various switches of a network, to multiple senders connected to the network at various locations. To support such multicasting, switches incorporate internal mechanisms to multicast incoming data to more than one output port; at least one of these additional output ports can then act as a monitor port. The present invention takes advantage of this multicasting capability of the network by treating traffic on each input port of the switch as being from a sender which has receivers downstream on more than one output port. Thus, by multicasting within the switch, the network data traffic that passes through this switch can be promiscuously monitored.

Fig. 4 illustrates a multicasting routing methodology to perform promiscuous monitoring within the switch shown in Fig. 3. As a data packet is received at input port 2, interconnection network 210 routes the data packet to the destination data output port, for example, data output port 1; this is represented in Fig. 4 as a dotted line. Interconnection network 210 also routes a copy of the data packet to monitor output port 1; this is represented in Fig. 4 as a solid line. Similarly, as a data packet is received at input port 1, interconnection network 210 routes the data packet to the destination data output port, for example, data output port 3; this is represent in Fig. 4 as a dotted line. Interconnection network 210 also routes a copy of the data packet to monitor output port 1; this is represented in Fig. 4 as a solid line. Although not shown in Fig. 4, interconnection network 210 routes each data packet received at each input port to the appropriate destination data output port(s), while also routing a copy of all data packets or routing a selective set of data packets to monitor output port 1.

In a second embodiment of the present invention, multiple monitor output ports are connected to the switch. By configuring the switch with multiple monitor output ports, the present invention can perform load balancing to better distribute the data packets copied for promiscuous monitoring among multiple monitor output ports. Thus, if certain input ports receive more communication data traffic than other input ports, the task of promiscuously monitoring these input ports having heavy communication traffic can be divided among the various monitor processors connected to the various monitor output ports of the switch. A similar function can be used to balance the load among output ports as well. Therefore, no one monitor processor is disproportionally monitoring more communication data than the other monitor processors.

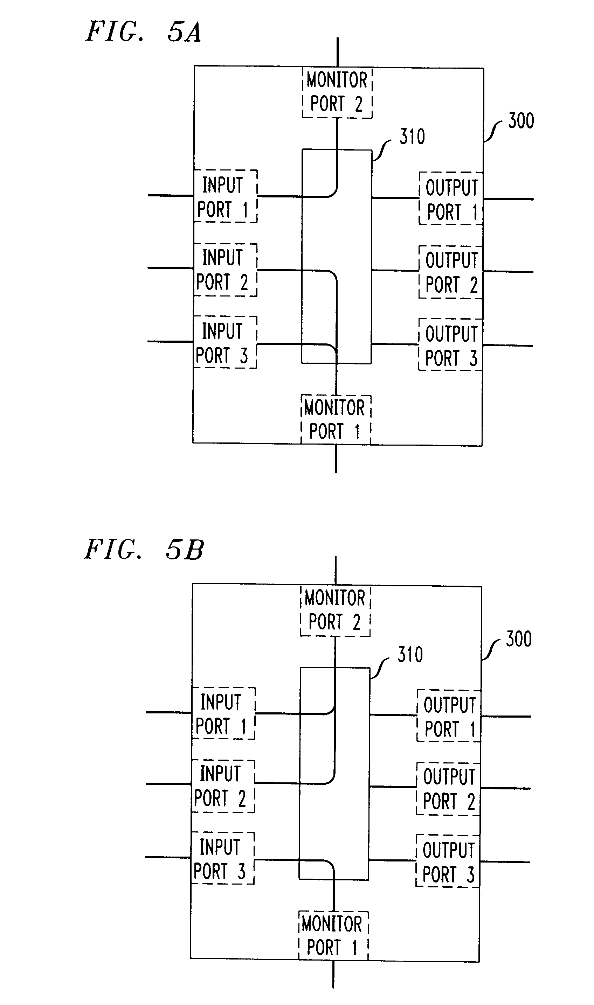

Figs. 5A and 5B shows a switch with multiple monitor output ports according to the second embodiment of the present invention. Switch 300, as shown in Figs. 5A and 5B, has three input ports, three data output ports and two monitor output ports. Fig. 5A illustrates a configuration where as a data packet is received at input port 1 and forwarded to the proper destination data output port(s) (not shown), interconnection network 310 also routes a copy of the data packet to monitor output port 2. Also shown in Fig. 5A, as a data packet is received at either input port 2 or input port 3 and forwarded to the proper destination output port(s) (not shown), interconnection network 310 also routes a copy of the data packet to monitor output port 1. The routing of the data packet copies to the monitor output ports are shown in Fig. 5A as solid lines.

Fig. 5B illustrates an alternative configuration where as a data packet is received at either input port 1 or input port 2 and forwarded to the proper destination data output port(s) (not shown), interconnection network 310 also routes a copy of the data packet to monitor output port 2. Also shown in Fig. 5B, as a data is received at input port 3 and forwarded to the proper destination data output port(s) (not shown), interconnection network 310 also routes a copy of the packet to monitor output port 1.

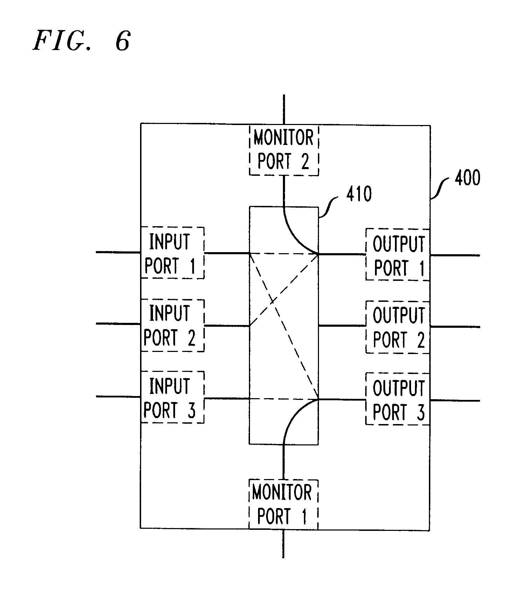

In a third embodiment of the present invention, the multicasting can be based on the data packets having been forwarded to output ports, rather than the data packets received at input ports as was the case with Figs. 4, 5A and 5B. Fig. 6 shows a switch with multiple monitor output ports and output port-based monitoring according to the third embodiment of the present invention. Switch 400, as shown in Fig. 6, has three input ports, three data output ports and two monitor output ports. As a data packet is received at input ports 1 and 2, interconnection network 410 routes a copy of the data packet to destination data output port 1; this is represented in Fig. 6 as dotted lines. Interconnection network 410 also routes a copy of the data packet to monitor output port 2; this is represented as solid lines. Similarly, as a data packet is received at input ports 1 and 3, interconnection network 410 routes a copy of the data packet to destination data output port 3; this is represented as dotted lines. Interconnection network 410 also routes a copy of the data packet to monitor output port 2; this is represented in Fig. 6 as solid lines.

In embodiments of the present invention having multiple monitor output ports, the characteristics of the interconnection network controlling the routing of data between input ports and monitor output ports can be modified as the traffic patterns of the connected links change over time. Modifications to the interconnection network can be performed easily because the routing of data is controlled through software rather than through the hardware configurations of the prior art, such as optical splitters, which are comparatively inflexible.

It should, of course, be understood that while the present invention has been described in reference to switches having particular characteristics, switches of other characteristics should be apparent to those of ordinary skill in the art. For example, the switch can have any number of input ports, data output ports and monitor output ports. Similarly, any number of promiscuous monitor processors can be connected to the switch on monitor output ports, or in other words, output ports not being utilized. The present invention is equally applicable for any type of switch, such as an input-buffered switch, output-buffered switch and shared-memory switch.

## Claims

1. A switch, within a switched communication network, for enabling promiscuous monitoring, comprising:
a plurality of input ports including a first input port, said plurality of input ports receiving a plurality of data packets including a first data packet and a second data packet;
a plurality of data output ports including a first data output port and a second data output port;
a first monitor output port; and
an interconnection network connected to i) said plurality of input ports, ii) said plurality of output ports, and iii) said first monitor output port, said interconnection network routing the first data packet from the first input port to the first data output port, said interconnection network routing a copy of the first data packet to said first monitor output port.

2. The switch of claim 1, wherein a copy of each data packet of the plurality of data packets is routed to said first monitor output port.

3. The switch of claim 1, wherein a copy of a subset of the plurality of data packets is routed to said first monitor output port.

4. The switch of claim 1, wherein said interconnection network routes a copy of each data packet received at the first input port to said first monitor output port.

5. The switch of claim 1, wherein said interconnection network selects a subset of the plurality of data packets received at the first input port and routes a copy of the subset to said first monitor output port.

6. The switch of claim 5, wherein said interconnection network selects the subset on a dynamic basis.

7. The switch of claim 5, wherein said interconnection network selects the subset on a virtual circuit basis.

8. The switch of claim 1, wherein said interconnection network routes to said first monitor output port a copy of each data packet forwarded to the first data output port.

9. The switch of claim 1, wherein said interconnection network selects a subset of the plurality of data packets forwarded to the first data output port and routes a copy of the subset to said first monitor output port.

10. The switch of claim 9, wherein said interconnection network selects the subset on a dynamic basis.

11. The switch of claim 9, wherein said interconnection network selects the subset on a virtual circuit basis.

12. The switch of claim 1, further comprising:
a second monitor output port connected to said interconnection network;
said interconnection network routes the second data packet from the second input port to the second data output port and routes a copy of the second data packet to said second monitor output port.

13. The switch of claim 12, wherein said interconnection network selects a first subset of the plurality of data packets and routes a copy of the first subset to said first monitor output port, said interconnection network selects a second subset of the plurality of data packets and routes a copy of the second subset to said second monitor output port.

14. The switch of claim 13, wherein said interconnection network balances the load between data packets routed to said first monitor output port and data packets routed to said second monitor output port.

15. The switch of claim 13, wherein said interconnection network selects the first subset or second subset on a dynamic basis.

16. The switch of claim 13, wherein said interconnection network selects the first subset or second subset on a virtual circuit basis.
